# EUROPEAN PATENT SPECIFICATION

(11) **EP 2 571 232 B1**
(45) Date of publication and mention of the grant of the patent: **23.11.2016**
(21) Application number: 11780566.3
(22) Date of filing: 09.05.2011
(51) Int. Cl.: G06F 17/30, G06Q 50/00, H04M 1/00, H04M 11/00, H04W 4/02, H04M 1/725, H04L 29/08

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF INFORMATIQUE, PROCÉDÉ INFORMATIQUE, ET LOGICIEL

(30) Priority: 11.05.2010 JP 2010109292
(43) Date of publication of application: 20.03.2013
(73) Proprietor: NTT DOCOMO, INC., Chiyoda-ku Tokyo 100-6150 (JP)
(72) Inventor: HASHIDA, Naoki, Tokyo 100-6150 (JP); SUZUKI, Kantaro, Tokyo 100-6150 (JP); YOSHIDA, Shuhei, Tokyo 100-6150 (JP)
(74) Representative: Hoffmann Eitle
(86) International application number: PCT/JP2011/060641
(87) International publication number: WO 2011/142309

(56) References cited:
- EP-A2- 2 141 610
- JP-A- 9 113 599
- JP-A- 2002 238 079
- JP-A- 2007 156 788
- JP-A- 2010 102 656
- US-A1- 2008 082 651
- US-A1- 2009 006 543
- US-B1- 7 685 144

## Description

### Technical Field

The present invention relates to information-processing technology for assisting input.

### Background Art

A number of communication terminals, such as mobile phones, that can measure their own positions using GPS (Global Positioning System) technology are increasing. A variety of applications that utilize the measured position are being developed. One such application that uses the measured position, for example, performs notification of a pre-set content when a mobile phone moves to the vicinity of a registered location (for example, JP-A-2002-238079).

US-A1-2008/0082651 discloses an apparatus for providing a task reminder which includes a monitoring module configured to monitor a location of a user via a mobile communication device associated with the user at predetermined time intervals for tracking historical travel information of the user and a data store for storing the historical travel information and for storing user specified task information that includes a task and a task location. The apparatus includes a reminder module configured to calculate a novelty rating of a region that includes the task location and a current position of the user based on the user's historical travel information. The apparatus also includes a message module configured to generate a reminder of the task based on the novelty rating of the region and a distance between the task location and the current position of the user.

US-B1-7,685,144 discloses techniques for automatically generating and maintaining personal data, such as an address book, a financial portfolio, a discussion groups or blogs book, or other types of personal data stores, based on a person's structured search data and/or usage data (e.g., browsing) and/or other sources of personal data (e.g., emails the user receives). Related metadata can also be used in the generating and/or maintaining of the personal data. Dynamic personal data ranking and/or autocomplete functions are also provided, which can be used in conjunction with the automatic generation and maintenance of the user's personal data, to further ease the user's burden in managing and/or handling such data.

### Disclosure of Invention

### Problems to be Solved by the Invention

The information relating to the content of notification and the location where notification should be made are pre-set in a device other than the mobile phone, such as a server, and in registering the content of setting, it is necessary to input information to be set, by use of operation buttons of the mobile phone. If such setting is made frequently, it may be necessary to input the same information many times, which is inefficient. Further, though the content of notification may be information containing a short string of characters, setting of the location where notification should be made needs to be performed in sufficient detail that the location can be identified. To identify a location, a user must specify it with an address or a map, for example. For these reasons, input for setting a location tends to take time and be cumbersome.

The present invention is made in view of the aforementioned background, and an object of the present invention is, when setting is made relating to a location where notification of a pre-set content to a communication terminal should be made, to assist input for the setting.

### Means of Solving the Problems

The present invention provides an information-processing device according to Claim 1.

The present invention also provides an information-processing method according to Claim 10.

The present invention also provides a program according to Claim 11.

### Effects

According to an embodiment of the present invention, it is possible, when setting is made relating to a location where notification of a pre-set content to a communication terminal should be made, to assist input for the setting.

### Brief Description of the Drawings

FIG. 1 is a diagram for explaining an information-providing system according to an exemplary embodiment of the present invention.
FIG. 2 is a block diagram showing a configuration of a communication terminal according to an exemplary embodiment of the present invention.
FIG. 3 is a block diagram showing a configuration of a relay device according to an exemplary embodiment of the present invention.
FIG. 4 is a diagram for explaining delivery reservation information according to an exemplary embodiment of the present invention.
FIG. 5 is a block diagram showing a configuration of a relay function according to an exemplary embodiment of the present invention.
FIG. 6 is a block diagram showing a configuration of an information-processing device according to an exemplary embodiment of the present invention.
FIG. 7 is a block diagram showing a configuration of an information-processing function according to an exemplary embodiment of the present invention.
FIG. 8 is a diagram for explaining setting operations performed between the devices constituting an information-providing system according to an exemplary embodiment of the present invention.
FIG. 9 is a first display example in a communication terminal according to an exemplary embodiment of the present invention.
FIG. 10 is a second display example in a communication terminal according to an exemplary embodiment of the present invention.
FIG. 11 is a third display example in a communication terminal according to an exemplary embodiment of the present invention.
FIG. 12 is a fourth display example in a communication terminal according to an exemplary embodiment of the present invention.
FIG. 13 is a fifth display example in a communication terminal according to an exemplary embodiment of the present invention.
FIG. 14 is a sixth display example in a communication terminal according to an exemplary embodiment of the present invention.
FIG. 15 is a diagram for explaining notifying operations performed between the devices constituting an information-providing system according to an exemplary embodiment of the present invention.
FIG. 16 is a block diagram showing a configuration of an information-processing function according to Modification 1 of the present invention.
FIG. 17 is a block diagram showing a configuration of a relay function according to Modification 2 of the present invention.
FIG. 18 is a block diagram showing a configuration of a relay function according to Modification 3 of the present invention.

### Description of Reference Symbols

1: information-providing system; 10: communication terminal; 20: relay device; 40, 50: communication network; 101, 201, 301: control unit; 102, 202, 302: storage unit; 103, 203, 303: operation unit; 104, 204, 304: 1040: display screen; display unit; 105, 205, 305: communication unit; 106: position measurement unit; 107: sound-processing unit; 211: position information acquisition unit; 212: notification determination unit; 213, 213A: notification information transmission unit; 214: setting reservation acquisition unit; 215: forwarding unit; 216: status information acquisition unit; 217: instruction information acquisition unit; 311: setting information acquisition unit; 312: notification control unit; 313: character information acquisition unit; 314: character information identification unit; 315, 315A: location information identification unit; 316: response transmission unit; 317: candidate-associating unit; 318: user information acquisition unit

### Mode for Carrying out the Invention

### [Overall Configuration]

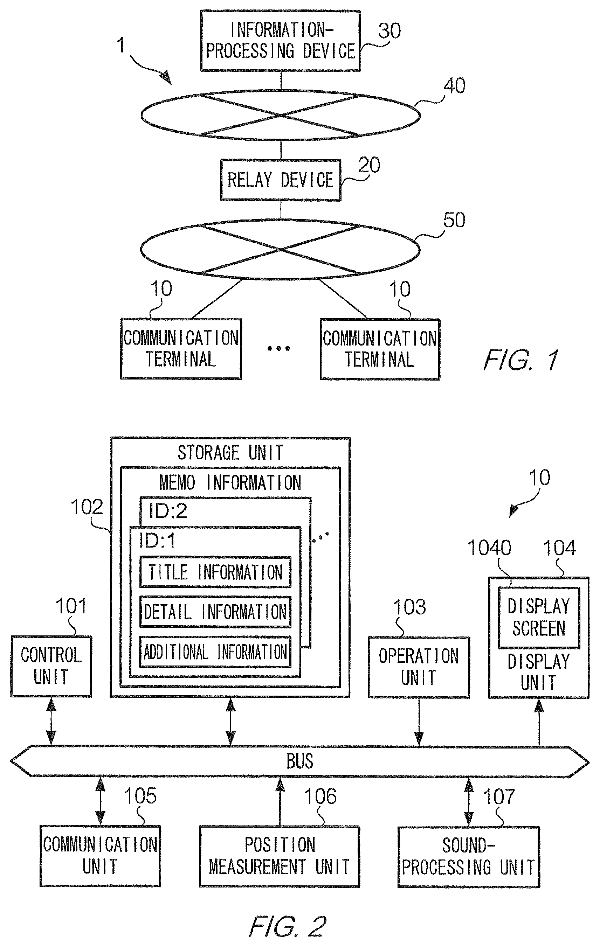

FIG. 1 is a diagram for explaining information-providing system 1 according to an exemplary embodiment of the present invention. Information-providing system 1 includes communication terminals 10 such as a mobile phone or a PDA (Personal Digital Assistant), relay device 20 such as a server device, and information-processing device 30 such as a server device. Information-providing system 1 further includes communication network 40 such as the Internet for connecting relay device 20 and information-processing device 30, and communication network 50 for connecting relay device 20 and communication terminals 10 via a base station or the like. Relay device 20 communicates with each of multiple communication terminals 10 via communication network 50, and communicates with information-processing device 30 via communication network 40. In this example, communication terminal 10 and information-processing device 30 do not communicate with each other directly, and communication therebetween is carried out via relay device 20.

Information-providing system 1 is a system in which, when communication terminal 10 moves to the vicinity of a registered location, a pre-set notification is made to that communication terminal 10. The content of the notification and the notification location can be set using communication terminal 10. When the setting is made using communication terminal 10, a user operates an operation unit to input a content of setting, and in this information-providing system 1, it is possible to assist input of a content of setting, thereby making an input operation easier.

In the following, explanation will be given of a concrete example of each component of information-providing system 1.

### [Configuration of Communication Terminal 10]

FIG. 2 is a block diagram showing a configuration of communication terminal 10 according to an exemplary embodiment of the present invention. Communication terminal 10 includes control unit 101, storage unit 102, operation unit 103, display unit 104, communication unit 105, position measurement unit 106, and sound-processing unit 107. These units are connected with one another via a bus.

Control unit 101 includes a CPU (Central Processing Unit), a ROM (Read Only Memory), a RAM (Random Access Memory), and so on. The CPU reads out a control program stored in the ROM, loads the control program in the RAM, and executes the control program, thereby to control various parts of communication terminal 10 via the bus, and achieve various functions such as a telephone call function, a communication function, a function of performing a process for making a setting relating to notification, and so on. Further, the RAM functions as a work area when the CPU processes various items of data.

Storage unit 102 is a storage means such as a non-volatile memory, and stores various items of information such as memo information. It is to be noted that storage unit 102 may be a storage medium, such as an external non-volatile memory, connected via a connection interface or the like.

The memo information is information including a memorandum created in advance through operation of operation unit 103 of communication terminal 10. This memo information includes multiple sets of title information, detail information, and additional information. Each set is assigned a memo ID.

Title information is information indicating the title of a memorandum. Detail information is information describing the content of a memorandum. Title information and detail information are information represented by characters. In the following description, simple reference to "character information" will refer to the content of title information and detail information.

Additional information is information other than character information. An example of a content stored as the additional information is information contained in registration completion information, which is received by communication unit 105. Registration completion information is information that is received when a content of a setting relating to notification is registered in information-processing device 30.

Operation unit 103 includes, for example, operation buttons such as numeric keys. When a user operates the operation buttons, operation unit 103 outputs data representing the content of the operation to control unit 101. By operating the operation buttons, a user inputs various instructions to make a telephone call, to input characters, to change various settings, or the like.

Display unit 104 is a display device, such as a liquid crystal display, that displays an image on display screen 1040. Display unit 104 displays an image on display screen 1040 under control of control unit 101. An image displayed on display screen 1040 may be any of various displays such as display corresponding to an operation, display of a menu, display of a memorandum, or display relating to provision of information, which will be described later, or display relating to information setting.

Position measurement unit 106 measures the position of the corresponding terminal by means of, for example, GPS technology, and outputs position information indicating the measured position, which, in this example, is a coordinate represented by latitude and longitude, at a predetermined time interval. It is to be noted that position measurement unit 106 is not limited to using GPS technology, so long as it can measure the position of the corresponding terminal, and may utilize any known technology, so long as the position of the corresponding terminal can be identified within a certain range.

Communication unit 105 wirelessly connects to a base station constituting communication network 50, and communicates with the base station according to control of control unit 101. Owing to this communication, a telephone call between users of communication terminals 10, transmission/reception of electronic mail, and transmission/reception of various items of information between relay device 20 and communication terminal 10 are achieved, and in addition, communication unit 105 further connects to a network such as the Internet via communication network 50, and performs communication of information or the like.

Further, communication unit 105 transmits the position information, which is output from position measurement unit 106, to relay device 20 at a predetermined time interval. Then, when notification information indicating a content of notification or the like is received as a response to the transmitted position information, communication unit 105 outputs the notification information to control unit 101, and causes display screen 1040 to display the content indicated by the notification information.

Further, control unit 105 transmits request information for requesting a setting input screen relating to notification and setting information indicating a content of setting, and receives response information indicating the setting input screen and registration completion information. Details of each of these items of information and details of transmission/reception timings will be described in explanation of setting operation and notifying operation. It is to be noted that, when transmitting each item of information, communication unit 105 also transmits information indicating a corresponding terminal, so that the source of transmission of each item of information can be identified at the recipient side.

Sound-processing unit 107 includes a microphone, a speaker, and a sound-processing circuit such as a DSP (Digital Signal Processor). Sound-processing unit 107 generates, by means of the sound-processing circuit, a sound pickup signal indicating a content of sound pickup performed by the microphone, and outputs the sound pickup signal. Further, sound-processing unit 107 performs, by means of the sound-processing circuit, sound processing on a sound signal input under control of control unit 101, and causes the speaker to output sound relating to the sound signal.

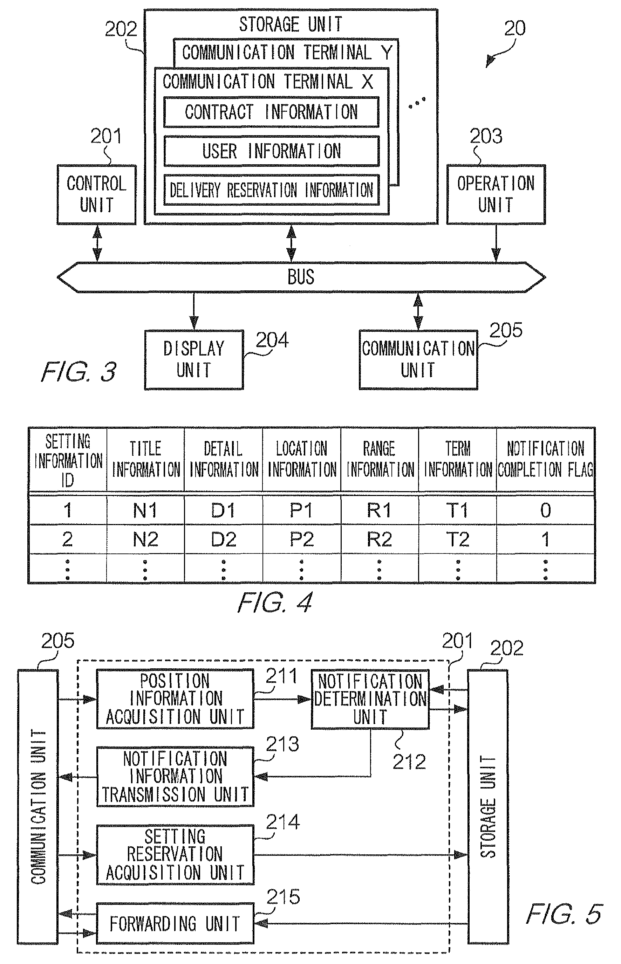

The foregoing is a description of the configuration of communication terminal 10. Next, explanation will be given of a configuration of relay device 20 with reference to FIG. 3.

### [Hardware Configuration of Relay Device 20]

FIG. 3 is a block diagram showing a configuration of relay device 20 according to an exemplary embodiment of the present invention. Relay device 20 includes control unit 201, storage unit 202, operation unit 203, display unit 204, and communication unit 205, and serves as a transmission device that transmits various items of information to communication terminal 10. These units are connected with one another via a bus.

Control unit 201 includes a CPU, a ROM, a RAM, a means for recognizing current time, and so on. The CPU reads out a control program stored in the ROM, loads the control program in the RAM, and executes the control program, thereby to control various parts of relay device 20 via the bus, and to achieve functions such as a relay function of performing a process relating to notification information that is transmitted according to the position information transmitted from communication terminal 10. Further, the RAM functions as a work area when the CPU processes various items of data.

Storage unit 202 is a storage means such as a hard disk or a non-volatile memory, for example, and stores various items of information such as contract information, user information, and delivery reservation information. These items of contract information, user information, and delivery reservation information are stored in association with the terminal ID of each of communication terminals 10 (communication terminals X, Y, etc.), and thus, are stored for each communication terminal 10.

Contract information is information indicating a contractual relationship between a user of communication terminal 10 of a corresponding terminal ID and a user of relay device 20. This contractual relationship includes, for example, presence/absence of a contract relating to a service of receiving transmission of notification information in information-providing system 1. User information is information relating to the user of communication terminal 10 of a corresponding ID.

Delivery reservation information is information in which a content of setting such as a condition for notification and a content to be notified to communication terminal 10 of a corresponding terminal ID is specified.

FIG. 4 is a diagram for explaining delivery reservation information according to an exemplary embodiment of the present invention. As shown in FIG. 4, registered in the delivery reservation information are items of setting information each including title information, detail information, location information, range information, and term information. Each item of setting information is assigned a setting information ID. In this example, the setting information ID corresponds to a memo information ID. Further, each item of setting information is associated with a notification completion flag.

Title information (N1, N2, ...) and detail information (D1, D2, ...) have been explained in the foregoing with regard to memo information, and each of them is information represented by characters.

Location information (P1, P2, ...) is information indicating a specific location, and is represented by a north latitude and an east longitude, for example. Range information (R1, R2, ...) is information indicating a specific range, and may be represented as a radius of 500 meters, for example. Of the conditions for transmitting notification information to communication terminal 10, a condition relating to a location is defined by the location information and the range information.

Term information is information indicating a specific term, and may include information relating to year, month, and day, such as "two months from February 10, 2010," and information relating to time such as "from 8 a.m. to 7 p.m." Of the conditions for transmitting notification information to communication terminal 10, a condition relating to time is defined by the term information.

A notification completion flag is information indicating whether transmission of notification information has been completed as a result of the conditions set by the corresponding item of setting information having been met. In this example, a notification completion flag "1" indicates that transmission of notification information has been performed according to the corresponding item of setting information. On the other hand, a notification completion flag "0" indicates that transmission of notification information has not been performed according to the corresponding item of setting information. It is to be noted that, when a predetermined time has passed after a notification completion flag is set to "1," the item of setting information corresponding thereto may be deleted from the delivery reservation information.

Explanation will be continued referring again to FIG. 3. Operation unit 203 includes operation elements such as a keyboard and a mouse. When a user of relay device 20 operates an operation element, operation unit 203 outputs data representing the content of the operation to control unit 201. By operating the operation elements, a user inputs instructions to achieve various settings or the like.

Display unit 204 is a display device, such as a liquid crystal display, that displays an image on a display screen. Display unit 204 displays an image on the display screen under control of control unit 201. An image displayed on the display screen may be any of various displays, such as display corresponding to an operation, display of a menu, or display of a setting screen.

Communication unit 205 performs, according to control of control unit 201, transmission/reception of various items of information to/from communication terminal 10, which is connected with communication unit 205 via communication network 50, as well as transmission/reception of various items of information to/from information-processing device 30 via communication network 40. When response information transmitted from information-processing device 30 is received, communication unit 205 forwards the response information to communication terminal 10 to which the response information should be transmitted.

The foregoing is a description of the hardware configuration of relay device 20.

### [Relay Function]

Next, with reference to FIG. 5, explanation will be given of a relay function that is achieved by execution of a control program by control unit 201. It is to be noted that a part or a whole of each component for achieving the relay function that will be described in the following may be embodied as hardware.

FIG. 5 is a block diagram showing a configuration of a relay function according to an exemplary embodiment of the present invention. By executing a control program, control unit 201 embodies position information acquisition unit 211, notification determination unit 212, notification information transmission unit 213, setting reservation acquisition unit 214, and forwarding unit 215, thereby to realize a relay function.

Position information acquisition unit 211 acquires position information transmitted from communication terminal 10 and received by communication unit 205, and outputs to notification determination unit 212 this position information and information indicating communication terminal 10 that transmitted this position information. It is to be noted that the position information indicating the position of communication terminal 10 may be position information defined relative to the position of the base station with which communication terminal 10 is communicating. In such a case, position information acquisition unit 211 may acquire position information transmitted from the base station or the like, instead of the position information transmitted from communication terminal 10.

Upon acquisition of the position information from position information acquisition unit 211, notification determination unit 212 recognizes the time the position information was acquired. Then, notification determination unit 212 refers to, of the items of delivery reservation information stored in storage unit 202, an item of delivery reservation information corresponding to communication terminal 10 that transmitted the position information, and compares the recognized time and the position indicated by the acquired position information with the term information, location information and range information of items of setting information. At this time, notification determination unit 212 excludes, from consideration for comparison, an item(s) of setting information whose associated notification completion flag is "1."

As a result of comparison, notification determination unit 212 identifies an item of setting information (setting information ID) for which these items of information satisfy a specific relationship, and outputs notification information, which includes the title information and the detail information indicated by the identified item of setting information, to notification information transmission unit 213. At this time, notification determination unit 212 changes the notification completion flag corresponding to the item of setting information from "0" to "1." It is to be noted that the notification information may be information indicating a setting information ID, namely a memo information ID.

The specific relationship is, in this example, that the position indicated by the position information is within the range indicated by the range information with its center being the position indicated by the location information and that the recognized time is within the term indicated by the term information.

On the other hand, if, as a result of the above comparison, the specific relationship is not met, notification determination unit 212 waits for next acquisition of position information.

Upon acquisition of the notification information from notification determination unit 212, notification information transmission unit 213 causes communication unit 205 to transmit the acquired notification information to communication terminal 10 that transmitted the position information, where the notification information is transmitted as a response to the transmission of the position information.

Setting reservation acquisition unit 214 acquires setting reservation information transmitted from information-processing device 30 and received by communication unit 205. Setting reservation information contains setting information, information indicating communication terminal 10 with regard to which the setting information should be registered as delivery reservation information, and a memo information ID. Upon acquisition of the setting reservation information, setting reservation acquisition unit 214 registers the setting information contained in the setting reservation information in the delivery reservation information corresponding to communication terminal 10 for which registration should be made.

Forwarding unit 215 acquires request information (request information A) transmitted from communication terminal 10 and received by communication unit 205. Then, forwarding unit 215 acquires, from storage unit 202, contract information and user information corresponding to communication terminal 10 that transmitted this request information A, and outputs request information A together with these items of information to communication unit 205, so that they are forwarded from communication unit 205 to information-processing device 30. At this time, this forwarding may not be performed, depending on the content of the contract information and/or user information relating to communication terminal 10. For example, if a contract for receiving provision of service using information-providing system 1 does not exist, forwarding unit 215 does not perform forwarding. The setting information transmitted from communication terminal 10 is treated similarly to the request information, except that the setting information may be forwarded without accompanying the contract information and the user information.

Further, forwarding unit 215 acquires registration completion information (registration completion information A) transmitted from information-processing device 30 and received by communication unit 205. Registration completion information contains information indicating the registered content of a setting, information indicating communication terminal 10 to which transmission should be made, a corresponding memo information ID, etc. Upon acquisition of the registration completion information, forwarding unit 215 outputs to communication unit 205 registration completion information B, which contains the registration completion information added with information for allowing the registered content of setting to be stored in additional information corresponding to the memo information ID regarding communication terminal 10, so that registration completion information B is forwarded by communication unit 205 to communication terminal 10 to which transmission should be made.

The foregoing is a description of the relay function.

### [Hardware Configuration of Information-processing Device 30]

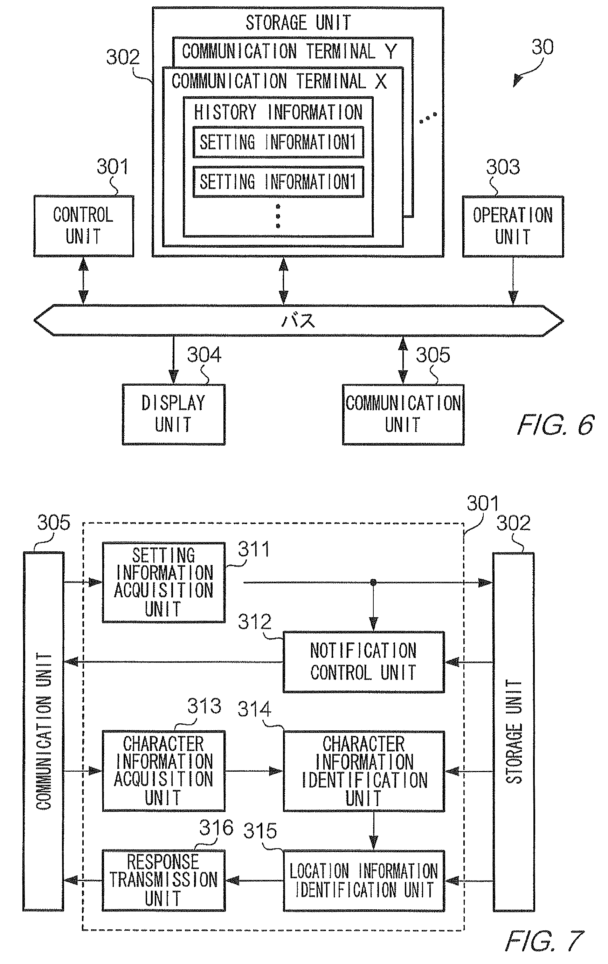

FIG. 6 is a block diagram showing a configuration of information-processing device 30 according to an exemplary embodiment of the present invention. Information-processing device 30 includes control unit 301, storage unit 302, operation unit 303, display unit 304, and communication unit 305. These units are connected with one another via a bus.

Control unit 301 includes a CPU, a ROM, a RAM, and so on. The CPU reads out a control program stored in the ROM, loads the control program in the RAM, and executes the control program, thereby to control various parts of information-processing device 30 via the bus, and achieve functions such as an information-processing function of executing a process according to various items of information transmitted from relay device 20, thereby to respond to the transmitted items of information. Further, the RAM functions as a work area when the CPU processes various items of data.

Storage unit 302 is a storage means such as a hard disk or a non-volatile memory, for example, and stores various items of information such as history information. History information is stored in association with the ID of each of communication terminals 10 (communication terminals X, Y, etc.), and thus, is stored for each communication terminal 10.

In each item of history information, items of setting information described in the foregoing are registered such that each item of setting information is associated with communication terminal 10 that transmitted it previously. Thus, in history information, items of setting information each indicating character information and location information set by a user of communication terminal 10 previously are registered.

Operation unit 303 includes operation elements such as a keyboard and a mouse. When a user of information-processing device 30 operates an operation element, operation unit 303 outputs to control unit 301 data representing the content of the operation. By operating the operation elements, a user inputs instructions to achieve various settings or the like.

Display unit 304 is a display device, such as a liquid crystal display, that displays an image on a display screen. Display unit 304 displays an image on the display screen under control of control unit 301. An image displayed on the display screen may be any of various displays such as display corresponding to an operation, display of a menu, or display of a setting screen.

Communication unit 305 performs, according to control of control unit 301, transmission/reception of various items of information to/from relay device 20, which is connected with communication unit 305 via communication network 40.

The foregoing is a description of the hardware configuration of information-processing device 30.

### [Information-processing Function]

Next, with reference to FIG. 7, explanation will be given of an information-processing function that is achieved by execution of a control program by control unit 301. It is to be noted that a part or a whole of each component for achieving the relay function that will be described in the following may be embodied as hardware.

FIG. 7 is a block diagram showing a configuration of an information-processing function according to an exemplary embodiment of the present invention. By executing a control program, control unit 301 embodies setting information acquisition unit 311, notification control unit 312, character information acquisition unit 313, character information identification unit 314, location information identification unit 315, and response transmission unit 316, thereby to realize an information-processing function.

Setting information acquisition unit 311 acquires setting information (setting information B) transmitted from relay device 20 and received by communication unit 305. Setting information acquisition unit 311 registers acquired setting information B in storage unit 302 as an item of history information corresponding to communication terminal 10 that transmitted the setting information, and outputs the setting information to notification control unit 312.

Upon acquisition of the setting information, notification control unit 312 outputs setting reservation information corresponding to this setting information, so that the setting reservation information is transmitted from communication unit 305 to relay device 20. Further, upon completion of registration of the setting information as history information, notification control unit 312 outputs registration completion information A so that registration completion information A is transmitted from communication unit 305 to relay device 20.

Character information acquisition unit 313 extracts and acquires, from request information B forwarded from relay device 20 and received by communication unit 305, an item of character information (title information, detail information) and an item of information indicating communication terminal 10 that transmitted the request information, and outputs these items of information to character information identification unit 314.

Upon acquisition of the item of character information from character information acquisition unit 313, character information identification unit 314 refers to, of the items of history information stored in storage unit 302, items of setting information registered as history information corresponding to communication terminal 10 that transmitted the request information, and identifies, from the items of character information contained in the items of setting information, an item(s) of character information similar to the acquired item of character information. In this example, an item of character information having the highest degree of similarity is identified.

A similar item of character information refers to, for example, of the items of character information registered in the history information, an item of character information where a percentage of the number of words contained therein, which words are identical with those contained in the acquired item of character information to the total number of all the words contained therein, is greater than or equal to a certain percentage. Further, it is assumed here that a higher percentage indicates a higher degree of similarity. It is to be noted that the definition of a similar item of character information is not thus limited to this, and a process using a known algorithm for calculating a degree of similarity may be utilized. Further, it is assumed here that exactly identical items of character information are included in similar items of character information.

Upon identification of the similar item of character information, character information identification unit 314 outputs to location information identification unit 315 information indicating the item of setting information in which this item of character information is contained. It is to be noted that, in a case where no setting information is registered in the history information or in a case where there is no similar item of character information, information indicating it is outputted.

By reading out location information in the item of setting information indicated by the information acquired from character information identification unit 314, location information identification unit 315 identifies location information corresponding to the item of character information identified by character information identification unit 314, and outputs the location information to response transmission unit 316. In a case where information indicating that there is no similar item of character information or the like is received, location information identification unit 315 may identify a predetermined location as the location information. In addition, location information identification unit 315 may identify location information determined according to a specific algorithm, such as location information relating to an item of setting information last registered in the history information. Further, it is possible to identify blank data as the location information.

Response transmission unit 316 causes response information containing the location information acquired from location information identification unit 315 to be transmitted from communication unit 305 as a response to communication terminal 10 that transmitted the request information.

The foregoing is a description of the communication control function.

### [Setting Operations and Display Examples]

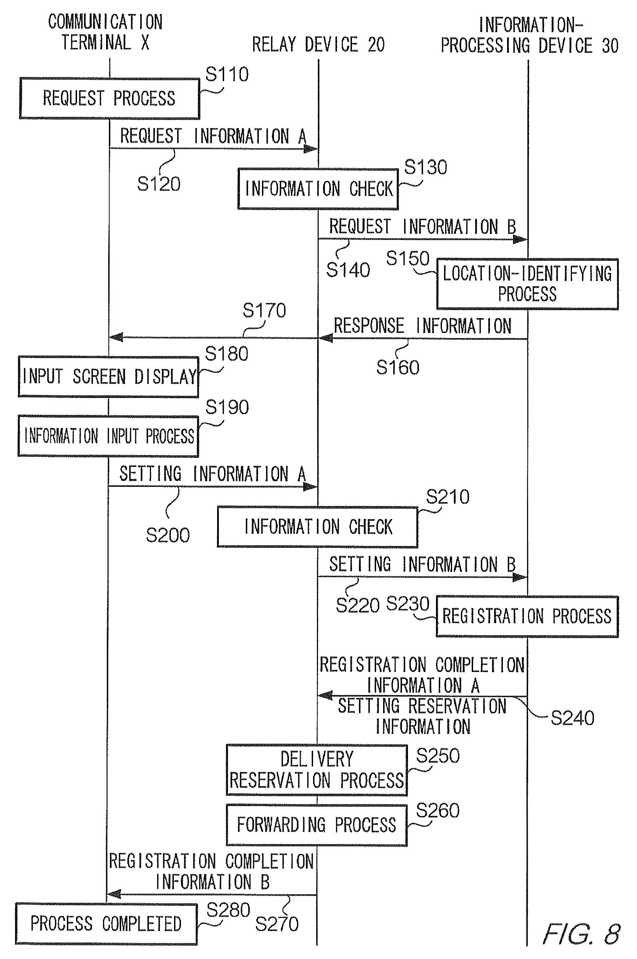

Next, with reference to FIGS. 8-14 together with display examples of display screen 1040 of communication terminal 10, explanation will be given of setting operations performed between the devices constituting information-providing system 1. Explanation will be given assuming that, in this example, transmission/reception of information is performed in communication terminal X of multiple communication terminals 10, in relay device 20, and in information-processing device 30.

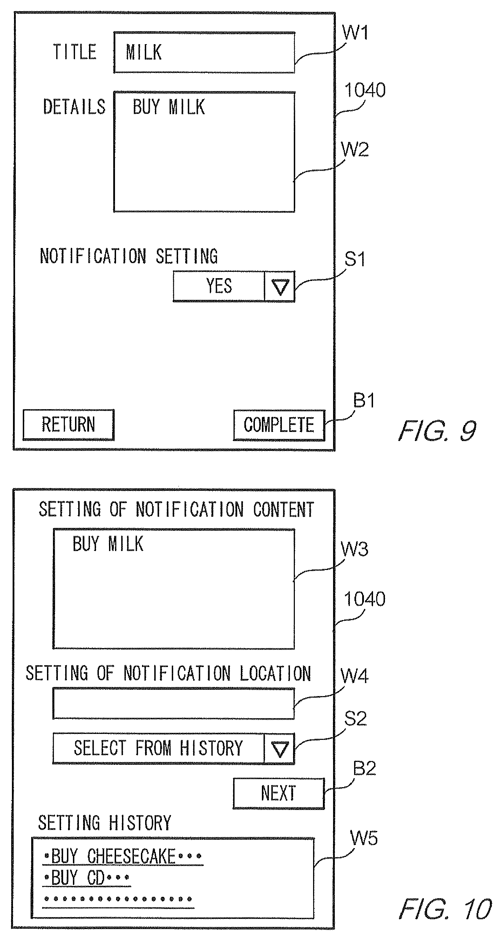

FIG. 8 is a diagram for explaining setting operations performed between the devices constituting information-providing system 1 according to an exemplary embodiment of the present invention. FIGS. 9-14 are first to sixth display examples in a communication terminal according to an exemplary embodiment of the present invention.

First, a user of communication terminal X performs an operation of communication terminal X indicating instruction of creating memo information. As a result, a screen such as that shown in FIG. 9 is displayed on display screen 1040 of communication terminal X. On display screen 1040 are displayed region W1 for inputting a content of title information and region W2 for inputting a content of detail information. It is to be noted that, in a case where an instruction is input to read out memo information that has been created already, the contents of the memo information are displayed in regions W1 and W2. In this example, "MILK" is displayed in region W1, and "BUY MILK" is displayed in region W2.

Further, selection box S1 is displayed on display screen 1040 for receiving designation of whether to receive notification according to the contents displayed in regions W1 and W2 when communication terminal X moves to a specific location, such that "YES" or "NO" can be selected.

After the user operates communication terminal X and completes respective input and selection, when the user instructs selection of "COMPLETE" button B1 displayed on display screen 1040, a request process is started (step S110, FIG. 8). The request process is a process in which control unit 101 generates memo information containing the contents of regions W1 and W2 set as title information and detail information, respectively, and stores the memo information in storage unit 102. In a case where "YES" is selected in selection box S1, control unit 101 also performs a process of generating request information A. It is to be noted here that request information A contains setting information in addition to information indicating communication terminal X and a memo information ID, where, in the setting information, items of information, such as location information, other than the character information (title information, detail information) that has been set, have not been defined yet, and thus, the content of each of these items of information is blank.

When the request process is completed, communication terminal X transmits request information A to relay device 20 (step S120). Upon receipt of request information A, relay device 20 checks its content, and checks the contract information and user information regarding communication terminal X (step S130). Relay device 20 determines, based on the contract information and user information, whether to forward the request information, and when it is determined that forwarding is to be performed, transmits request information B, in which these items of information are added to request information A, to information-processing device 30 (step S140).

Upon receipt of request information B, information-processing device 30 performs a location-identifying process (step S150). The location-identifying process is a process in the information-processing function described in the foregoing, from identification of location information based on the character information contained in received request information B to outputting of response information to communication unit 305. Thus, the location-identifying process corresponds to the processes performed in character information acquisition unit 313, character information identification unit 314, location information identification unit 315, and response transmission unit 316.

Specifically, since the items of character information contained in request information B are "MILK" and "BUY MILK," an item(s) of character information similar thereto is (are) identified by character information identification unit 314, and an item(s) of location information corresponding to the similar item of character information is (are) identified by location information identification unit 315. In a case where a similar setting has been made previously, for example, in a case where a setting that notification of "TO BUY MILK" should be made near "NORTH-SHINJUKU SHINJUKU-KU TOKYO" has been made, this information is registered in history information as setting information. Consequently, "NORTH-SHINJUKU SHINJUKU-KU TOKYO" corresponding to "TO BUY MILK" which is similar to "BUY MILK" will be identified as the location information.

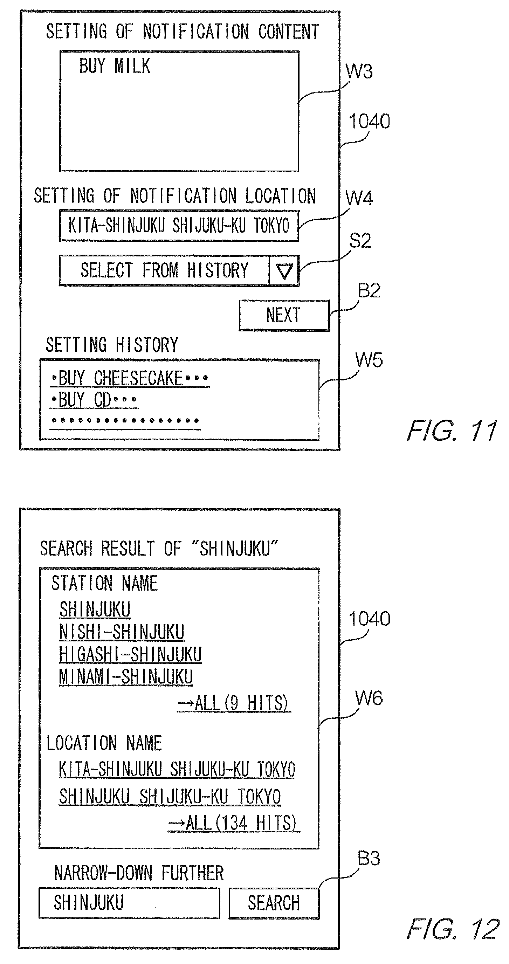

Subsequently, information-processing device 30 transmits response information containing the identified location information, etc. to relay device 20 (step S160). Relay device 20 forwards the response information to communication terminal X (step S170). As is described in the foregoing, the response information contains the location information identified in the location-identifying process and the memo information ID in request information B, and in this example, further contains information indicating screens as shown in FIGS. 10 and 11, which are to be displayed in an input screen display process (step S180), which will be described next.

Upon receipt of the response information, communication terminal X displays on display screen 1040 a screen for inputting settings relating to information to be notified, where the screen corresponds to the response information (step S180). In this example, a screen as shown in FIG. 10 is displayed. Specifically, displayed on display screen 1040 are region W3 for setting the content to be displayed when notification is performed and region W4 for setting the location where notification should be performed. The content displayed in region W3 is detail information corresponding to the memo information ID contained in the response information, and designates the content of detail information in setting information. It is to be noted that, though, in this example, display corresponding to the title information is not performed on display screen 1040, the content of the title information may be displayed when the content of the detail information is blank.

Further, displayed on this display screen 1040 are selection box S2 for setting a location using the history of the past settings and region W5 for displaying setting history for reflecting the previously set content as it is. In the example shown in FIG. 10, a screen displayed when no similar item of character information was identified in the location-identifying process is shown, and in this case, region W4 is blank when it is displayed first on display screen 1040.

On the other hand, if a similar item of character information was identified in the location-identifying process, a location indicated by the location information corresponding to this item of character information is displayed in region W4. For instance, with regard to the aforementioned example, as shown in FIG. 11, "NORTH-SHINJUKU SHINJUKU-KU TOKYO," which is the identified location information, is displayed in region W4 to be presented to the user as a candidate for location information to be set. By such display, if the user wishes to receive the same content as the content of notification set previously by the user (in this example, "BUY MILK") at the same location as the location set as the location where the notification should be made (in this example, "NORTH-SHINJUKU SHINJUKU-KU TOKYO"), the user can omit inputting information into region W4. Further, even when the content that the user wishes to be notified of and the previously set content are not identical (for example, in the case of "BUYING MILK" or the like), if there is a similar content of setting, this content of setting is presented as a candidate for location information, and thus, the user can omit inputting it.

Subsequently, the user operates communication terminal X to perform an information input process (step S190, FIG. 8). The information input process is a process in which various settings are input in the setting input screen. First, if it is necessary to correct the content in region W3 or W4 when they are displayed on display screen 1040 as shown in FIG. 10 or FIG. 11, the user corrects the content and then instructs selection of "NEXT" button B2, and if not, the user instructs selection of "NEXT" button B2 without correcting the content. It is to be noted that correction of content may be prohibited in region W3. After this instruction is made, if, depending on the content in region W4, a location cannot be identified or further narrowing-down is necessary, a screen for prompting narrowing-down is displayed. For example, in a case where "SHINJUKU" is input in region W4, region W6 for displaying the result of a search for "SHINJUKU" is displayed on display screen 1040, as shown in FIG. 12. In this state, with an instruction to select search button B3, further narrowing-down can be performed.

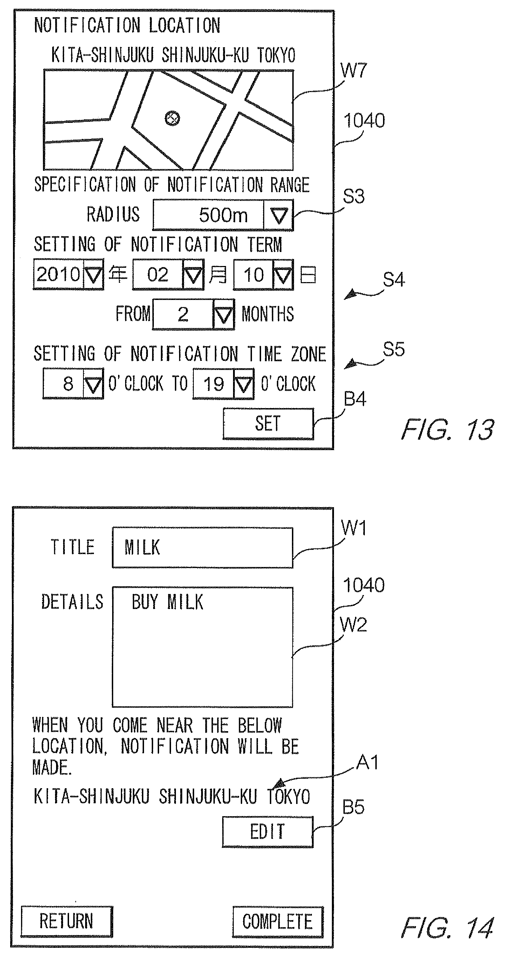

In a case where the user inputs an instruction to select "NORTH-SHINJUKU SHINJUKU-KU TOKYO" in the screen shown in FIG. 12, or in a case where the user inputs an instruction to select "NEXT" button B2 in the state shown in FIG. 11, a screen shown in FIG. 13 is displayed on display screen 1040. Namely, region W7 for displaying a map showing the selected location, "NORTH-SHINJUKU SHINJUKU-KU TOKYO," is displayed on display screen 1040. This location is treated as location information in setting information. Further, displayed on display screen 1040 are selection box S3 for selecting the range around the location in which notification should be made, and selection boxes S4, S5 for selecting the term and time zone in which notification should be made. The content specified by selection box S3 is regarded as range information in setting information, and the content specified by selection boxes S4, S5 is regarded as term information in setting information. When the user specifies these contents and inputs an instruction to select "SET" button B4, communication terminal X generates setting information A in accordance with the contents specified in the information input process, and transmits setting information A to relay device 20 (step S200, FIG. 8). A memo information ID is also contained in this setting information A.

Upon receipt of setting information A, relay device 20 checks its content, and checks the contract information and user information relating to communication terminal X (step S210). Based on the contract information and user information, relay device 20 determines whether to forward the setting information, and when it is determined that forwarding is to be performed, transmits setting information B, in which these items of information are added to request information A, to information-processing device 30 (step S220).

Upon receipt of setting information B, information-processing device 30 performs a registration process of this setting information B (step S230). The registration process indicates the processes performed by setting information acquisition unit 311 and notification control unit 312 in the aforementioned information-processing function, where setting information B is registered as history information, and registration completion information A and setting reservation information are generated. Then, information-processing device 30 transmits registration completion information A and the setting reservation information to relay device 20 (step S240). It is to be noted that registration completion information A and the setting reservation information may be transmitted at different timings. For example, it is possible that transmission of setting reservation information is performed at a timing corresponding to information relating to year, month, and day indicated by the term information contained in the setting information, such as on the day before the date specified by the year, month, and day.

Upon receipt of the setting reservation information, relay device 20 performs a delivery reservation process (step S250). The delivery reservation process is a process performed by setting reservation acquisition unit 214 in the relay function, where the setting information transmitted from communication terminal X is registered as delivery reservation information corresponding to communication terminal X.

Further, upon receipt of registration completion information A, relay device 20 performs a forwarding process (step S260). The forwarding process is a process performed by forwarding unit 215 as a relay function, where to registration completion information A, information (which may be a processing command or the like) is added for allowing it to be stored in additional information corresponding to the memo information ID in communication terminal X (namely, a process for converting registration completion information A into registration completion information B). Then, relay device 20 transmits registration completion information B to communication terminal X (step S270).

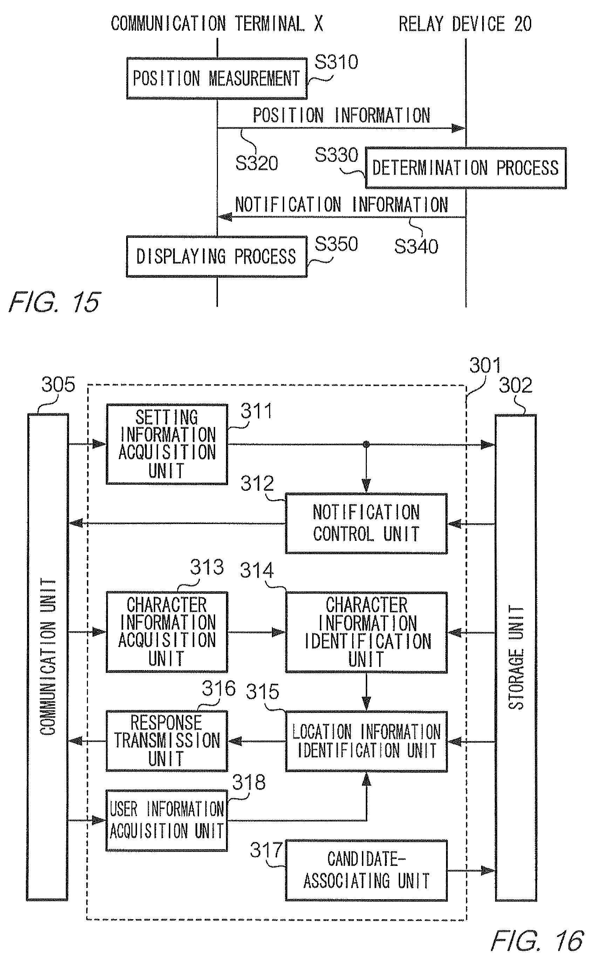

Upon receipt of registration completion information B, communication terminal X causes the registered content of setting to be stored as part of the additional information, and, as shown in FIG. 14, causes the character information (title information, detail information), which is the content of notification, to be displayed on display screen 1040, and causes the location where notification should be made, namely, the location indicated by the location information contained in registration completion information B, to be displayed on display screen 1040 (A1 part), thereby to complete the setting process (step S280). In this state, by making an instruction to select "EDIT" button B5, the user can edit the content of setting again, and when editing is performed, the screen shown in FIG. 11 is displayed again. It is to be noted that, in such a case as when editing is performed as described in the foregoing, the location information recognized by communication terminal 10 may be included in request information A when request information A is transmitted from communication terminal 10. The foregoing is a description of the setting operations. In the following, explanation will be given of setting operations performed between the devices constituting information-providing system 1, with reference to FIG. 15.

### [Notifying Operations]

FIG. 15 is a diagram for explaining notifying operations performed between the devices constituting an information-providing system according to an exemplary embodiment of the present invention.

Communication terminal X measures its own position at a predetermined time interval (step S310), and transmits position information indicating the position to relay device 20 (step S320). Upon receipt of the position information, relay device 20 performs a determination process in which determination is made on whether there is an item of setting information in the delivery reservation information that satisfies a specific relationship with the position information and the time of acquisition of the position information (step S330). The determination process corresponds to the process performed by notification determination unit 212 in the relay function described above. As is described in the foregoing, when there is an item of setting information that satisfies the specific relationship, relay device 20 transmits notification information (it is assumed here that the notification information indicates a memo information ID) to communication terminal X (step S340).

Upon receipt of the notification information, communication terminal X displays, on display screen 1040, information corresponding to the memo information ID indicated by the notification information and information indicating that the user of communication terminal X is near the set location (step S350).

The foregoing is a description of the notifying operations.

As is described in the foregoing, in information-providing system 1 according to an embodiment of the present invention, when communication terminal 10 transmits request information for requesting a setting input screen, information-processing device 30 recognizes character information contained in the request information, and, by referring to history information, identifies location information corresponding to character information similar to the recognized character information. The location information identified by information-processing device 30 is received by communication terminal 10, and this information is reflected on a setting input screen displayed on communication terminal 10. As a result, when setting of a location where acquisition of notification information is desired is made using communication terminal 10, a location in accordance with the past history is displayed on the setting input screen, and thus, the user does not have to perform input for specifying the location, such input tending to be cumbersome, and effort and time can be reduced.

An exemplary embodiment of the present invention has been explained in the foregoing. However, the present invention may be carried out in various embodiments, as will be described in the following.

### <Modification 1>

In the foregoing exemplary embodiment, information-processing device 30 refers to the history information stored in storage unit 302, and identifies location information corresponding to character information similar to the character information contained in the request information. Namely, one or more of the items of location information relating to the items of setting information registered in the history information is identified. In this modification, explanation will be given of a case where information other than the items of location information relating to the items of setting information may be identified as the location information corresponding to the similar character information.

FIG. 16 is a block diagram showing a configuration of an information-processing function according to Modification 1. The points in which this information-processing function differs from that in the exemplary embodiment are that a configuration of candidate-associating unit 317 and user information acquisition unit 318 is added, and that it includes location information identification unit 315A whose content of processing is different from that in the exemplary embodiment. The other configuration is the same as that in the exemplary embodiment, and thus, explanation thereof will be omitted.

Candidate-associating unit 317 has a function of referring to the history information, and, based on a predetermined algorithm, further associating each of the items of character information regarding the items of setting information registered in the history information with a candidate for location information to be identified by location information identification unit 315. As a result, some of the items of setting information registered in the history information may be associated with multiple items of location information.

The predetermined algorithm may be provided in variety of modes, and several examples thereof will be explained below.

A first mode provides an algorithm, according to which an item of location information corresponding to each item of character information is acquired from a database (not shown in the drawings) or the like, in which characters and items of location information are associated with one another. For example, if an item of character information "MILK" is contained, an item of location information corresponding thereto is acquired from the database, and is further associated with the item of character information regarding the history information.

A second mode provides an algorithm, according to which, in the history information corresponding to one communication terminal 10, location information corresponding to one of the items of character information which are similar to each other is also associated with location information of the other item of character information.

A third mode provides an algorithm, according to which, in the second mode, association of location information is performed taking into consideration history information corresponding to another communication terminal. For example, if an item of character information is "BUY MILK," candidate-associating unit 317 associates with this item of character information, as a candidate, a location that has been registered by a user of another communication terminal 10 as corresponding to "BUY MILK."

User information acquisition unit 318 acquires, from the items of user information stored in relay device 20, an item of user information contained in request information B, and outputs it to location information identification unit 315A. As is described in the foregoing, user information is information regarding a user of communication terminal 10, and in this example, is assumed to be information relating to a location, such as an address, a commuting route, etc.

In a case where a result of reading out of location information in the setting information indicated by the information acquired from character information identification unit 314 shows that there are multiple items of location information, location information identification unit 315A refers to the user information, and selects an item of location information that has a specific relationship with the location indicated by the user information. In an exemplary case where the content indicated by the user information is information relating to a location extending over a certain area, such as a commuting route, location information identification unit 315A may select an item of location information indicating a location that is the closest to the commuting route.

As is described in the foregoing, depending on the character information contained in request information B, information-processing device 30 may propose the location where notification should be made from information other than the content of setting information registered previously.

### < Modification 2>

In the exemplary embodiment described above, it is possible that relay device 20 does not perform transmission of notification information depending on a status of the user of communication terminal 10. In this case, communication terminal 10 transmits status information indicating the current status to relay device 20. This status information indicates the current status set by operation of communication terminal 10 by the user, and may be, for example, setting of a manner mode for silencing a ringtone. In this modification, it is assumed that the status information is transmitted every time the setting is changed. The relay function of relay device 20 in this case is achieved in a manner described in the following.

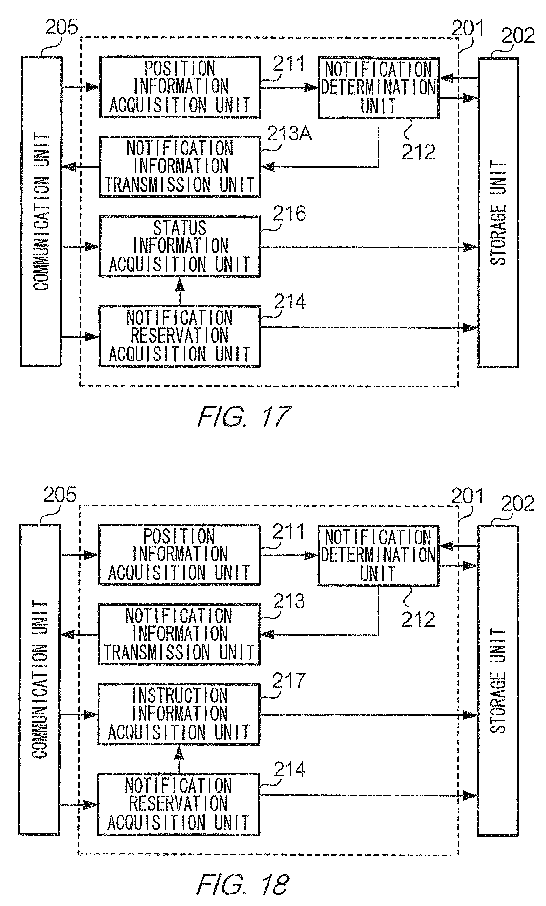

FIG. 17 is a block diagram showing a configuration of a relay function according to Modification 2. The points in which this relay function differs from that in the exemplary embodiment are that status information acquisition unit 216 is added, and that it includes notification information transmission unit 213A whose content of processing is different from that in the exemplary embodiment. The other configuration is the same as that in the exemplary embodiment, and thus, explanation thereof will be omitted.

Status information acquisition unit 216 acquires status information transmitted from communication terminal 10, and in a case where the status information satisfies a predetermined condition, instructs notification information transmission unit 213A to stop transmission of notification information to that communication terminal 10.

Notification information transmission unit 213A performs a process similar to that in the exemplary embodiment, except that notification information transmission unit 213A does not transmit notification information to communication terminal 10 for which an instruction to stop transmission has been provided from status information acquisition unit 216. In this case, notification information transmission unit 213A sets, in the delivery reservation information, the notification completion flag of the setting information relating to the notification information of which transmission is stopped, back to "0."

It is to be noted that, in information-providing system 1, the above-described stopping of transmission of notification information depending on the status of the user may be achieved in another manner. For example, communication terminal 10 may stop transmission of position information to relay device 20, whereby notification information is not transmitted from relay device 20.

Further, it is possible for information indicating whether the aforementioned process should be applied to be included in the setting reservation information transmitted from information-processing device 30, and for relay device 20 to perform control to cause notification information transmission unit 213A to determine, based on that information, whether to perform the process of stopping transmission of notification information. In this case, whether the aforementioned process should be applied may be set by operation of control terminal 10 by the user, such that this setting is included in request information A or setting information A.

### <Modification 3>

In the foregoing exemplary embodiment, after transmitting an item of notification information, relay device 20 sets the corresponding notification completion flag to "1" to exclude the item of notification information from items of notification information to be transmitted. However, it is possible that, when a specific condition is met, the notification completion flag may be set back to "0" so that the item of notification information is included again in the items of notification information to be transmitted. The specific condition is, for example, that in response to operation of communication terminal 10 by a user, communication terminal 10 transmits instruction information indicating an instruction of re-notification of a specific item of notification information from communication terminal 10. The relay function of relay device 20 in this case is achieved in a manner described in the following.

FIG. 18 is a block diagram showing a configuration of a relay function according to Modification 3. The point in which this relay function differs from that in the exemplary embodiment is that instruction information acquisition unit 217 is added. The other configuration is the same as that in the exemplary embodiment, and thus, explanation thereof will be omitted.

Instruction information acquisition unit 217 acquires instruction information transmitted from communication terminal 10, recognizes, from the delivery reservation information, setting information corresponding to the notification information specified by the instruction information, and corrects the notification completion flag corresponding to the setting information from "1" to "0."

In the above process, if a screen regarding notification information is displayed on communication terminal 10, a re-notification button may be included in the screen, such that, upon selection of this button, instruction information indicating an instruction of re-notification of this notification information is transmitted. In this case, instruction information acquisition unit 217 performs the aforementioned correction after a predetermined time has passed, instead of performing it immediately. It is to be noted that instruction information acquisition unit 217 may correct the transmission completion flag after it is determined in notification determination unit 212 that the position information and the setting information relating to the notification information no longer satisfy the specific relationship.

In this way, when a user views a content notified to communication terminal 10, but the user cannot act on the content immediately and wishes to have the content re-notified when the user enters the vicinity of the location again, the user can arrange such re-notification by selecting the re-notification button. Further, by not correcting the notification completion flag for a certain time, notification determination unit 212 can prevent re-notification from being performed immediately.

It is to be noted that, in information-providing system 1, the above-described re-notification in response to a user instruction may be achieved in another manner. Further, it is possible for information indicating whether the aforementioned process should be applied to be contained in the setting reservation information transmitted from information-processing device 30, so that relay device 20 can control, based on this information, whether to correct the notification completion flag.

### <Modification 4>

In the foregoing exemplary embodiment, character information identification unit 314 identifies, as similar character information, only an item of character information having the highest degree of similarity. However, it is possible to identify any item of character information having a degree of similarity higher than or equal to a certain value, so that multiple items of character information may be identified. In this case, location information identification unit 315 will identify multiple items of location information. As a result, communication terminal 10 displays on display screen 1040 a list of the locations indicated by the multiple items of location information, where the display may be adapted such that selection of one of the locations in the list is allowed. Further, if the locations indicated by multiple items of location information have a common part, communication terminal 10 may display the common part on display screen 1040. For example, in a case where the multiple items of location information are "NISHI-SHINJUKU SHINJUKU-KU TOKYO" and "KITA-SHINJUKU SHINJUKU-KU TOKYO," communication terminal 10 may identify the common part, which is "SHINJUKU-KU TOKYO," as location information. Further, location information identification unit 315 may recognize a common part, and identify the location indicated by the common part as location information.

### <Modification 5>

In the foregoing exemplary embodiment, relay device 20 may give a degree of priority to each item of setting information in the delivery reservation information. Communication determination unit 212 may be adapted such that, in a case where, as a result of the aforementioned comparison, there are multiple items of setting information that indicate a specific relationship, communication determination unit 212 executes a process according to the degree of priority; for example, communication determination unit 212 may perform output in the order of the degree of priority and/or may perform output such that those with low degrees of priory are not output. The degree of priority may be set by a user, and contained in request information transmitted from communication terminal 10. Further, information-processing device 30 may transmit the degree of priority as a part of the setting reservation information, so that the degree of priority is registered in the delivery reservation information. It is to be noted that the degree of priority may be imparted automatically by relay device 20. The automatic impartation may be performed, for example, in the order of time when each item of setting information was registered as delivery reservation information, or in an ascending order of the remaining period in the term information, or the degree of priority may be imparted in an ascending order of narrowness indicated by the range information. In this case, a priority degree-imparting unit (not shown in the drawings) is provided in the relay function of relay device 20.

It is to be noted that, in information-providing system 1, the above-described re-transmission of notification information according to the degree of priority may be achieved in another manner. Further, it is possible for information indicating whether the aforementioned process should be applied to be contained in setting reservation information transmitted from information-processing device 30, so that relay device 20 can control, based on this information, whether to perform the process according to the degree of priority.

### <Modification 6>

In the foregoing exemplary embodiment, depending on the content of setting information A transmitted from communication terminal 10, notification information may be transmitted from notification information transmission unit 213 of relay device 20 immediately after the setting is made. For example, this occurs when the position indicated by the location information in setting information A is identical with the position of mobile terminal 10. To prevent this, in response to transmission of setting information A from communication terminal 10, relay device 20 may register the setting information in the delivery reservation information after a predetermined time has passed after the transmission, or may register the setting information at a timing after notification determination unit 212 determines that the setting information regarding the registration and the position information no longer satisfy a specific relationship. Also, notification determination unit 212 may start the process regarding the determination after setting information is registered in the delivery reservation information and after the setting information relating to the registration and the position information no longer satisfy the specific relationship.

In this way, it is possible to prevent relay device 20 from making notification immediately after communication terminal 10 makes a setting relating to notification.

It is to be noted here that, in a case where setting of a location is made in communication terminal 10, communication terminal 10 may display, on the screen shown in FIGS. 10 and 11, a button for setting the current position as the location to be set, such that, upon selection of this button, the position indicated by the position information is set as the location information. Even in this case, by the aforementioned process, it is possible to prevent relay device 20 from transmitting notification information immediately after setting is made using communication terminal 10.

It is to be noted that, in information-providing system 1, the above-described prevention of transmission of notification information immediately after setting is made may be achieved in another manner. Further, it is possible for information indicating whether the aforementioned process should be applied to be contained in setting reservation information transmitted from information-processing device 30, so that relay device 20 can control, based on this information, whether to adopt the configuration for preventing immediate transmission of notification information.

### <Modification 7>

Some or all of the processes performed by relay device 20 in the foregoing exemplary embodiment may be performed in information-processing device 30. In a case where all of the processes performed by relay device 20 are performed in information-processing device 30, relay device 20 is no longer necessary in information-providing system 1, and the configuration of forwarding unit 215 may be omitted, since each process is performed in information-processing device 30.

In a manner differing from the foregoing, some of the functions of relay device 20 and information-processing device 30 may be achieved in another device connected via communication network 40 or the like. For example, storage unit 302 in information-processing device 30 may be provided in mobile terminal 10 or in another server or the like, and in this case, when information-processing device 30 refers to history information, it acquires the history information from relay device 20 and mobile terminal 10. In a case where storage unit 302 is provided in mobile terminal 10, it does not have to store history information corresponding to another terminal, and information-processing device 30 may acquire history information from respective terminals. Further, in a case where storage unit 302 is provided in another server, information-providing system 1 is configured to include this other device.

### <Modification 8>

The additional information stored in storage unit 102 of communication terminal 10 in the foregoing exemplary embodiment may further contain a flag used when the memo information is managed as a ToDo item and a ToDo deadline indicating a deadline thereof, a starting date and time and an ending date and time that are set when the memo information is managed as a schedule, an alarm time that is set as a notification timing of an alarm when the content of the memo information is to be notified as an alarm, and various items of information of the location relating to the memo information. In this case, each item of information contained in this additional information may be transmitted when request information A is transmitted from communication terminal 10 (step S120 in FIG. 8).

In this case, information-processing device 30 may transmit response information (step S160 in FIG. 8) such that, in accordance with the starting date and time and the ending date and time contained in the additional information, values are displayed in advance in selection box S4 in the screen shown in FIG. 13. For example, when the starting date and time are 8 a.m. on February 10, 2010 and the ending date and time are 7 p.m. on April 10, 2010, "FROM 2010 YEAR 02 MONTH 10 DAY, 2 MONTHS" may be displayed in advance, as shown in FIG. 13. At this time, the time information may be reflected in selection box S5.

### <Modification 9>

In the foregoing exemplary embodiment, when character information identification unit 314 refers to setting information registered in the history information corresponding to communication terminal 10 that transmitted request information, and identifies, from the items of character information contained in the setting information, an item(s) of character information similar to the acquired item of character information, if no character information to be identified is contained in the referred-to setting information, it is possible not to perform the identification. For example, it is possible that, when, for each item of character information, the calculated degree of similarity is less than or equal to a predetermined threshold value, character information identification unit 314 does not identify an item of character information.

Further, in this case, character information identification unit 314 outputs the acquired item of character information to location information identification unit 315. Location information identification unit 315 analyses the item of character information acquired from character information identification unit 314, and determines whether the item of character information contains information relating to a location. This analysis is, for example, morphological analysis of the item of character information. Then, in a case where information relating to a location is contained, location information identification unit 315 may identify this location or a location relating to this location as location information. For example, in a case where the item of character information is "have a drink in Akasaka," location information identification unit 315 recognizes "Akasaka" as information relating to a location.

On the other hand, in a case where no information relating to a location is contained, a predetermined location or the like may be identified as location information, as described in the exemplary embodiment.

Further, as is described in Modification 8, in a case where the additional information contains information of a location relating to the memo information, if character information identification unit 314 does not identify an item of character information, location information identification unit 315 may identify, as location information, information on a location relating to the memo information.

### <Modification 10>

The control program in the exemplary embodiment described above may be stored in a computer-readable storage medium such as a magnetic storage medium (a magnetic tape, a magnetic disk, or the like), an optical storage medium (an optical disk or the like), a magneto-optical storage medium, a semiconductor memory, and so on. Each device in information-providing system 1 can download the control program via a network.

## Claims

1. An information-processing device (30) arranged to refer to history information stored in a storage unit (102) and control a transmission device (105) that is arranged to transmit information to a communication terminal (10), the storage unit (102) storing, as the history information, items of setting information that indicate items of character information set previously by a user of the communication terminal (10), the character information being a content of a notification to be sent to the communication terminal (10), and items of location information corresponding to the items of character information, the location information indicating a location where the notification should be made relative to the communication terminal (10), the information-processing device (30) comprising:
a character information acquisition means (313) arranged to acquire, from the communication terminal (10), an item of character information set by the user, the character information being a content of a notification to be sent to the communication terminal (10);
a character information identification means (314) arranged to refer to the history information, and identify, from the items of character information contained in the history information, an item of character information similar to the acquired item of character information;
a location information identification means (315) arranged to refer to the history information, and identify an item of location information corresponding to the identified item of character information;
a response transmission means (316) arranged to, when an item of location information corresponding to the acquired item of character information is to be set by the user, transmit to the communication terminal (10) response information for causing the identified item of location information to be presented to the user as a candidate for the item of location information to be set;
a setting information acquisition means (311) arranged to acquire an item of setting information indicating the acquired item of character information and an item of location information set by the user, from the communication terminal (10) receiving the response information; and
a notification control means (312) arranged to, when the item of location information indicated by the acquired item of setting information and an item of position information indicating a position of the communication terminal (10) come into a specific relationship, cause the transmission device to transmit to the communication terminal (10) notification information according to the item of character information corresponding to the item of location information indicated by the acquired item of setting information.

2. The information-processing device (30) according to Claim 1,
wherein
when an item of information similar to the acquired item of character information is not included in the items of character information contained in the history information, the character information identification means (314) is arranged to not perform identification of an item of character information, and
when the character information identification means (314) does not perform the identification, the location information identification means (315) is arranged to analyse the acquired item of character information, and, based on an item of information relating to a location contained in the acquired item of character information, to identify an item of location information.

3. The information-processing device (30) according to Claim 1, further comprising:
a candidate-associating means (317) arranged to, based on a predetermined algorithm, further associate, with each of the items of character information relating to the history information, an item of location information serving as a candidate to be presented to the user; and
a user information acquisition means (318) arranged to acquire user information indicating information relating to the user of the communication terminal (10),
wherein the location information identification means (315) is arranged to identify, from the items of location information corresponding to the item of character information identified by the character information identification means (314), an item of location information in accordance with the user information acquired by the user information acquisition means (318).

4. The information-processing device (30) according to Claim 3,
wherein
the storage unit (102) stores history information for each communication terminal (10), and
the candidate-associating means (317) is arranged to identify an item of character information similar to an item of character information relating to history information corresponding to one communication terminal (10), from history information corresponding to another communication terminal (10), and associate, as an item of location information serving as a candidate, an item of location information corresponding to the identified item of character information with the item of character information relating to the history information corresponding to the one communication terminal (10).

5. The information-processing device (30) according to Claim 3,
wherein
the user information is information relating to a location, and
the location information identification means (315) is arranged to identify, from the multiple items of information, an item of location information indicating a location having a predetermined positional relationship with a location relating to the user information.

6. The information-processing device (30) according to Claim 1,
wherein
a degree of priority is allocated to each of the items of setting information in the history information, and
in a case where there are multiple items of location information that are in the specific relationship, the notification control means (312) is arranged to control the transmission device (105) to transmit the notification information according to the degree of priority of each of the items of setting information in which the multiple items of location information are contained.

7. The information-processing device (30) according to Claim 1,
wherein, in a case where status information indicating a status of the user transmitted from the communication terminal (10) satisfies a predetermined condition, the communication control means is arranged to control the transmission device (105) to stop transmission of the notification information.

8. The information-processing device (30) according to Claim 1,
wherein, when the item of location information indicated by the item of setting information acquired by the setting information acquisition means (311) and the item of position information within a predetermined time period after the acquisition come into the specific relationship, the notification control means (312) is arranged to control the transmission device (105) such that it does not transmit the notification information.

9. The information-processing device (30) according to Claim 1,
wherein, in a case where the notification control means (312) does not acquire, within a predetermined time period after transmission of the notification information by the transmission device, instruction information indicating an instruction of re-notification as a response to the notification information, the notification control means (312) is arranged to control the transmission device (105) such that it does not transmit the notification information thereafter, and in a case where the instruction information is acquired within the predetermined time period, the notification control means (312) is arranged to control the transmission device (105) to transmit the notification information again when the specific relationship is satisfied next.

10. An information-processing method used in a device that refers to history information stored in a storage unit and controls a transmission device that transmits information to a communication terminal, the storage unit storing, as the history information, items of setting information that indicate items of character information set previously by a user of the communication terminal, the character information being a content of a notification to be sent to the communication terminal, and items of location information corresponding to the items of character information, the location information indicating a location where the notification should be made relative to the communication terminal, the information-processing method comprising:
a character information acquisition step of acquiring, from the communication terminal, an item of character information set by the user, the character information being a content of a notification to be sent to the communication terminal;
a character information identification step (S110) of referring to the history information, and identifying, from the items of character information contained in the history information, an item of character information similar to the acquired item of character information;
a location information identification step (S150) of referring to the history information, and identifying an item of location information corresponding to the identified item of character information;
a response transmission step (S160) of, when an item of location information corresponding to the acquired item of character information is to be set by the user, transmitting to the communication terminal response information for causing the identified item of location information to be presented to the user as a candidate for the item of location information to be set;
a setting information acquisition step (S200) of acquiring an item of setting information indicating the acquired item of character information and an item of location information set by the user, from the communication terminal receiving the response information; and
a notification control step (S340) of, when the item of location information indicated by the acquired item of setting information and an item of position information indicating a position of the communication terminal come into a specific relationship, causing the transmission device to transmit to the communication terminal notification information according to the item of character information corresponding to the item of location information indicated by the acquired item of setting information.

11. A program for causing a computer to perform the following steps, the computer referring to history information stored in a storage unit and controlling a transmission device that transmits information to a communication terminal, and the storage unit storing, as the history information, items of setting information that indicate items of character information set previously by a user of the communication terminal, the character information being a content of a notification to be sent to the communication terminal, and items of location information corresponding to the items of character information, the location information indicating a location where the notification should be made relative to the communication terminal:
a step of acquiring, from the communication terminal, an item of character information set by the user, the character information being a content of a notification to be sent to the communication terminal;
a step of referring to the history information, and identifying, from the items of character information contained in the history information, an item of character information similar to the acquired item of character information;
a step of referring to the history information, and identifying an item of location information corresponding to the identified item of character information;
a step of, when an item of location information corresponding to the acquired item of character information is to be set by the user, transmitting to the communication terminal response information for causing the identified item of location information to be presented to the user as a candidate for the item of location information to be set;
a step of acquiring an item of setting information indicating the acquired item of character information and an item of location information set by the user, from the communication terminal receiving the response information; and
a step of, when the item of location information indicated by the acquired item of setting information and an item of position information indicating a position of the communication terminal come into a specific relationship, causing the transmission device to transmit to the communication terminal notification information according to the item of character information corresponding to the item of location information indicated by the acquired item of setting information.

## Patentansprüche

1. Informationsverarbeitungsvorrichtung (30), eingerichtet zum Bezugnehmen auf Verlaufsinformationen, die in einer Speichereinheit (102) gespeichert sind, und zum Steuern einer Sendevorrichtung (105), die eingerichtet ist, um Informationen an ein Kommunikationsendgerät (10) zu senden, wobei die Speichereinheit (102) Elemente von Einstellungsinformationen, die Elemente von Zeicheninformationen angeben, die zuvor von einem Benutzer des Kommunikationsendgeräts (10) eingestellt wurden, wobei die Zeicheninformationen der Inhalt einer Benachrichtigung sind, die an das Kommunikationsendgerät (10) gesendet werden soll, und Elemente von Standortinformationen, die den Elementen von Zeicheninformationen entsprechen, wobei die Standortinformationen einen Standort angeben, an dem die Benachrichtigung mit Bezug auf das Kommunikationsendgerät (10) erfolgen soll, als Verlaufsinformationen speichert wobei die Informationsverarbeitungsvorrichtung (30) Folgendes umfasst:
ein Mittel (313) zum Erfassen von Zeicheninformationen, das eingerichtet ist, um von dem Kommunikationsendgerät (10) ein Element von Zeicheninformationen, das von dem Benutzer eingestellt wird, zu erfassen, wobei die Zeicheninformationen der Inhalt einer Benachrichtigung sind, die an das Kommunikationsendgerät (10) gesendet werden soll;
ein Mittel (314) zum Identifizieren von Zeicheninformationen, das eingerichtet ist, um sich auf die Verlaufsinformationen zu beziehen und aus den Elementen von Zeicheninformationen, die in den Verlaufsinformationen enthalten sind, ein Element von Zeicheninformationen ähnlich wie das erfasste Element von Zeicheninformationen zu identifizieren;
ein Mittel zum Identifizieren von Standortinformationen (315), das eingerichtet ist, um sich auf die Verlaufsinformationen zu beziehen und ein Element von Standortinformationen, das dem identifizierten Element von Zeicheninformationen entspricht, zu identifizieren;
ein Antwortsendemittel (316), das, wenn ein Element von Standortinformationen, das dem erfassten Element von Zeicheninformationen entspricht, von dem Benutzer eingestellt werden soll, eingerichtet ist, um Antwortinformationen an das Kommunikationsendgerät (10) zu senden, um zu bewirken, dass das identifizierte Element von Standortinformationen dem Benutzer als ein Kandidat für das einzustellende Element von Standortinformationen vorgelegt wird;
ein Mittel (311) zum Erfassen von Einstellungsinformationen, das eingerichtet ist, um ein Element von Einstellungsinformationen, welches das erfasste Element von Zeicheninformationen angibt, und ein Element von Standortinformationen, das von dem Benutzer eingestellt wird, von dem Kommunikationsendgerät (10), das die Antwortinformationen empfängt, zu erfassen; und
ein Mittel (312) zum Steuern von Benachrichtigungen, das, wenn das Element von Standortinformationen, das von dem erfassten Element von Einstellungsinformationen angegeben wird, und ein Element von Positionsinformationen, das eine Position des Kommunikationsendgeräts (10) angibt, eine spezifische Beziehung eingehen, eingerichtet ist, um zu bewirken, dass die Sendevorrichtung an das Kommunikationsendgerät (10) Benachrichtigungsinformationen gemäß dem Element von Zeicheninformationen, das dem Element von Standortinformationen entspricht, das von dem erfassten Element von Einstellungsinformationen angegeben wird, sendet.

2. Informationsverarbeitungsvorrichtung (30) nach Anspruch 1, wobei
wenn ein Element von Informationen ähnlich wie das erfasste Element von Zeicheninformationen nicht in den Elementen von Zeicheninformationen enthalten ist, die in den Verlaufsinformationen enthalten sind, nicht enthalten ist, das Mittel (314) zum Identifizieren von Zeicheninformationen eingerichtet ist, um die Identifizierung eines Elements von Zeicheninformationen nicht auszuführen, und
wenn das Mittel (314) zum Identifizieren von Zeicheninformationen die Identifizierung nicht ausführt, das Mittel (315) zum Identifizieren von Standortinformationen eingerichtet ist, um das erfasste Element von Zeicheninformationen zu analysieren, und basierend auf einem Element von Informationen bezüglich eines Standorts, das in dem erfassten Element von Zeicheninformationen enthalten ist, ein Element von Standortinformationen zu identifizieren.

3. Informationsverarbeitungsvorrichtung (30) nach Anspruch 1, ferner umfassend:
ein Mittel (317) zum Verknüpfen von Kandidaten, das eingerichtet ist, um basierend auf einem vorbestimmten Algorithmus ferner mit jedem der Elemente von Zeicheninformationen bezüglich der Verlaufsinformationen ein Element von Standortinformationen, das als Kandidat dient, der dem Benutzer vorgelegt werden soll, zu verknüpfen; und
ein Mittel (318) zum Erfassen von Benutzerinformationen, das eingerichtet ist, um Benutzerinformationen zu erfassen, die Informationen bezüglich des Benutzers des Kommunikationsendgeräts (10) angeben,
wobei das Mittel (315) zum Identifizieren von Standortinformationen eingerichtet ist, um aus den Elementen von Standortinformationen, die dem Element von Zeicheninformationen entsprechen, das von dem Mittel (314) zum Identifizieren von Zeicheninformationen identifiziert wird, ein Element von Standortinformationen gemäß den Benutzerinformationen, die von dem Mittel (318) zum Erfassen von Benutzerinformationen erfasst werden, zu identifizieren.

4. Informationsverarbeitungsvorrichtung (30) nach Anspruch 3, wobei
die Speichereinheit (102) Verlaufsinformationen für jedes Kommunikationsendgerät (10) speichert, und
das Kandidatenverknüpfungsmittel (317) eingerichtet ist, um ein Element von Zeicheninformationen ähnlich wie ein Element von Zeicheninformationen bezüglich der Verlaufsinformationen, die einem Kommunikationsendgerät (10) entsprechen, aus Verlaufsinformationen, die einem anderen Kommunikationsendgerät (10) entsprechen, zu identifizieren und als ein Element von Standortinformationen, das als Kandidat dient, ein Element von Standortinformationen, das dem identifizierten Element von Zeicheninformationen entspricht, mit dem Element von Zeicheninformationen bezüglich der Verlaufsinformationen, die dem einen Kommunikationsendgerät (10) entsprechen, zu verknüpfen.

5. Informationsverarbeitungsvorrichtung (30) nach Anspruch 3, wobei
die Benutzerinformationen Informationen bezüglich eines Standorts sind, und
das Mittel (315) zum Identifizieren von Standortinformationen eingerichtet ist, um aus den mehreren Elementen von Informationen ein Element von Standortinformationen, das einen Standort angibt, der eine vorbestimmte Positionsbeziehung mit einem Standort bezüglich der Benutzerinformationen aufweist, zu identifizieren.

6. Informationsverarbeitungsvorrichtung (30) nach Anspruch 1, wobei
jedem der Elemente von Einstellungsinformationen in den Verlaufsinformationen eine Prioritätsstufe zugeteilt wird, und
für den Fall, dass es mehrere Elemente von Standortinformationen gibt, die sich in der spezifischen Beziehung befinden, das Mittel (312) zum Steuern von Benachrichtigungen eingerichtet ist, um die Sendevorrichtung (105) zu steuern, damit sie die Benachrichtigungsinformationen gemäß der Prioritätsstufe jedes der Elemente von Einstellungsinformationen, in denen die mehreren Elemente von Standortinformationen enthalten sind, sendet.

7. Informationsverarbeitungsvorrichtung (30) nach Anspruch 1, wobei für den Fall, dass Statusinformationen, die einen Status des Benutzers angeben, der von dem Kommunikationsendgerät (10) gesendet wird, eine vorbestimmte Bedingung erfüllen, das Kommunikationssteuermittel eingerichtet ist, um die Sendevorrichtung (105) zu steuern, damit sie die Sendung der Benachrichtigungsinformationen beendet.

8. Informationsverarbeitungsvorrichtung (30) nach Anspruch 1, wobei, wenn das Element von Standortinformationen, das durch das Element von Einstellungsinformationen angegeben wird, das von dem Mittel (311) zum Erfassen von Einstellungsinformationen erfasst wird, und das Element von Positionsinformationen innerhalb eines vorbestimmten Zeitraums nach der Erfassung die spezifische Beziehung eingehen, das Mittel (312) zum Steuern von Benachrichtigungen eingerichtet ist, um die Sendevorrichtung (105) derart zu steuern, dass sie die Benachrichtigungsinformationen nicht sendet.

9. Informationsverarbeitungsvorrichtung (30) nach Anspruch 1, wobei für den Fall, dass das Mittel (312) zum Steuern von Benachrichtigungen innerhalb eines vorbestimmten Zeitraums nach dem Senden der Benachrichtigungsinformationen durch die Sendevorrichtung, keine Anweisungsinformationen erfasst, die eine Anweisung zur erneuten Benachrichtigung als Antwort auf die Benachrichtigungsinformationen angeben, das Mittel (312) zum Steuern von Benachrichtigungen eingerichtet ist, um die Sendevorrichtung (105) derart zu steuern, dass sie die Benachrichtigungsinformationen danach nicht sendet, und für den Fall, dass die Anweisungsinformationen innerhalb des vorbestimmten Zeitraums erfasst werden, das Mittel (312) zum Steuern von Benachrichtigungen eingerichtet ist, um die Sendevorrichtung (105) zu steuern, damit sie die Benachrichtigungsinformationen wieder sendet, wenn die spezifische Beziehung das nächste Mal erfüllt ist.

10. Informationsverarbeitungsverfahren, das in einer Vorrichtung verwendet wird, die sich auf Verlaufsinformationen bezieht, die in einer Speichereinheit gespeichert sind, und eine Sendevorrichtung steuert, die Informationen an ein Kommunikationsendgerät sendet, wobei die Speichereinheit Elemente von Einstellungsinformationen, die Elemente von Zeicheninformationen angeben, die zuvor von einem Benutzer des Kommunikationsendgeräts eingestellt wurden, wobei die Zeicheninformationen der Inhalt einer Benachrichtigung sind, die an das Kommunikationsendgerät gesendet werden soll, und Elemente von Standortinformationen, die den Elementen von Zeicheninformationen entsprechen, wobei die Standortinformationen einen Standort angeben, an dem die Benachrichtigung mit Bezug auf das Kommunikationsendgerät erfolgen soll, als Verlaufsinformationen speichert, wobei das Informationsverarbeitungsverfahren Folgendes umfasst:
einen Schritt zum Erfassen von Zeicheninformationen, um von dem Kommunikationsendgerät ein Element von Zeicheninformationen zu erfassen, das von dem Benutzer eingestellt wird, wobei die Zeicheninformationen der Inhalt einer Benachrichtigung sind, die an das Kommunikationsendgerät gesendet werden soll;
einen Schritt (S110) zum Identifizieren von Zeicheninformationen, um sich auf die Verlaufsinformationen zu beziehen und aus den Elementen von Zeicheninformationen, die in den Verlaufsinformationen enthalten sind, ein Element von Zeicheninformationen ähnlich wie das erfasste Element von Zeicheninformationen zu identifizieren;
einen Schritt (S150) zum Identifizieren von Standortinformationen, um sich auf die Verlaufsinformationen zu beziehen und ein Element von Standortinformationen, das dem identifizierten Element von Zeicheninformationen entspricht, zu identifizieren;
einen Schritt (S160) zum Senden von Antworten, um, wenn ein Element von Standortinformationen, das dem erfassten Element von Zeicheninformationen entspricht, von dem Benutzer eingestellt werden soll, Antwortinformationen an das Kommunikationsendgerät zu senden, um zu bewirken, dass das identifizierte Element von Standortinformationen dem Benutzer als ein Kandidat für das einzustellende Element von Standortinformationen vorgelegt wird;
einen Schritt (S200) zum Erfassen von Einstellungsinformationen, um ein Element von Einstellungsinformationen, die das erfasste Element von Zeicheninformationen angeben, und ein Element von Standortinformationen, das von dem Benutzer eingestellt wird, aus dem Kommunikationsendgerät, das die Antwortinformationen empfängt, zu erfassen; und
einen Schritt (S340) zum Steuern von Benachrichtigungen, um, wenn das Element von Standortinformationen, das von dem erfassten Element von Einstellungsinformationen angegeben wird, und ein Element von Positionsinformationen, das eine Position des Kommunikationsendgeräts angibt, eine spezifische Beziehung eingehen, zu bewirken, dass die Sendevorrichtung an das Kommunikationsendgerät Benachrichtigungsinformationen gemäß dem Element von Zeicheninformationen sendet, die dem Element von Standortinformationen entsprechen, das von dem erfassten Element von Einstellungsinformationen angegeben wird.

11. Program zum Bewirken, dass ein Computer die folgenden Schritte ausführt, wobei sich der Computer auf Verlaufsinformationen bezieht, die in einer Speichereinheit gespeichert sind, und eine Sendevorrichtung steuert, die Informationen an ein Kommunikationsendgerät sendet, und die Speichereinheit Elemente von Einstellungsinformationen, die Elemente von Zeicheninformationen angeben, die zuvor von einem Benutzer des Kommunikationsendgeräts eingestellt wurden, wobei die Zeicheninformationen der Inhalt einer Benachrichtigung sind, die an das Kommunikationsendgerät gesendet werden soll, und Elemente von Standortinformationen, die den Elementen von Zeicheninformationen entsprechen, wobei die Standortinformationen einen Standort angeben, an dem die Benachrichtigung mit Bezug auf das Kommunikationsendgerät erfolgen soll, als Verlaufsinformationen speichert:
einen Schritt des Erfassens von dem Kommunikationsendgerät eines Elements von Zeicheninformationen, das von dem Benutzer eingestellt wird, wobei die Zeicheninformationen der Inhalt einer Benachrichtigung sind, die an das Kommunikationsendgerät gesendet werden soll;
einen Schritt des Bezugnehmens auf die Verlaufsinformationen und des Identifizierens aus den Elementen von Zeicheninformationen, die in den Verlaufsinformationen enthalten sind, eines Elements von Zeicheninformationen ähnlich wie das erfasste Element von Zeicheninformationen;
einen Schritt des Bezugnehmens auf die Verlaufsinformationen und des Identifizierens eines Elements von Standortinformationen, die dem identifizierten Element von Zeicheninformationen entsprechen;
einen Schritt des Sendens, wenn ein Element von Standortinformationen, das dem erfassten Element von Zeicheninformationen entspricht, von dem Benutzer eingestellt werden soll, von Antwortinformationen an das Kommunikationsendgerät, um zu bewirken, dass das identifizierte Element von Standortinformationen dem Benutzer als ein Kandidat für das einzustellende Element von Standortinformationen vorgelegt wird;
einen Schritt des Erfassens eines Elements von Einstellungsinformationen, die das erfasste Element von Zeicheninformationen angeben, und eines Elements von Standortinformationen, das von dem Benutzer eingestellt wird, aus dem Kommunikationsendgerät, das die Antwortinformationen empfängt; und
einen Schritt des Bewirkens, wenn das Element von Standortinformationen, das von dem erfassten Element von Einstellungsinformationen angegeben wird, und ein Element von Positionsinformationen, das eine Position des Kommunikationsendgeräts angibt, eine spezifische Beziehung eingehen, dass die Sendevorrichtung an das Kommunikationsendgerät Benachrichtigungsinformationen gemäß dem Element von Zeicheninformationen, das dem Element von Standortinformationen entspricht, das von dem erfassten Element von Einstellungsinformationen angegeben wird, sendet.

## Revendications

1. Dispositif de traitement d'informations (30) agencé pour se référer à des informations d'historique stockées dans une unité de stockage (102) et commander un dispositif de transmission (105) qui est agencé pour transmettre des informations à un terminal de communication (10), l'unité de stockage (102) stockant, en tant qu'informations d'historique, des éléments d'informations de réglage qui indiquent des éléments d'informations de caractère précédemment réglés par un utilisateur du terminal de communication (10), les informations de caractère étant un contenu d'une notification devant être envoyée au terminal de communication (10), et des éléments d'informations d'emplacement correspondant aux éléments d'informations de caractère, les informations de localisation indiquant un emplacement où la notification doit être faite par rapport au terminal de communication (10), le dispositif de traitement d'informations (30) comprenant :
- un moyen d'acquisition d'informations de caractère (313) agencé pour acquérir, à partir du terminal de communication (10), un élément d'informations de caractère réglé par l'utilisateur, les informations de caractère étant un contenu d'une notification devant être envoyée au terminal de communication (10) ;
- un moyen d'identification d'informations de caractère (314) agencé pour se référer aux informations d'historique, et identifier, à partir des éléments d'informations de caractère contenus dans les informations d'historique, un élément d'informations de caractère similaire à l'élément d'informations de caractère acquis ;
- un moyen d'identification d'informations d'emplacement (315) agencé pour se référer aux informations d'historique, et identifier un élément d'informations d'emplacement correspondant à l'élément d'informations de caractère identifié ;
- un moyen de transmission de réponse (316) agencé pour, lorsqu'un élément d'informations d'emplacement correspondant à l'élément de caractère d'informations de caractère acquis doit être réglé par l'utilisateur, transmettre au terminal de communication (10) des informations de réponse pour amener l'élément d'informations d'emplacement identifié à être présenté à l'utilisateur comme un candidat pour l'élément d'informations d'emplacement à régler;
- un moyen d'acquisition d'informations de réglage (311) agencé pour acquérir un élément d'informations de réglage indiquant l'élément d'informations de caractère acquis et un élément d'informations d'emplacement réglé par l'utilisateur, depuis le terminal de communication (10) qui reçoit les informations de réponse ; et
- un moyen de commande de notification (312) agencé pour, lorsque l'élément d'informations d'emplacement indiqué par l'élément d'informations de réglage acquis et un élément d'informations de position indiquant une position du terminal de communication (10) entrent dans une relation spécifique, amener le dispositif de transmission à transmettre au terminal de communication (10) des informations de notification selon l'élément d'informations de caractère correspondant à l'élément d'informations d'emplacement indiqué par l'élément d'informations de réglage acquis.

2. Dispositif de traitement d'informations (30) selon la revendication 1, dans lequel
- lorsqu'un élément d'informations similaire à l'élément d'informations de caractère acquis n'est pas inclus dans les éléments d'informations de caractère contenus dans les informations d'historique, le moyen d'identification d'informations de caractère (314) est agencé de façon à ne pas effectuer l'identification d'un élément d'informations de caractère, et
- lorsque le moyen d'identification d'informations de caractère (314) n'effectue pas l'identification, le moyen d'identification d'informations d'emplacement (315) est agencé pour analyser l'élément d'informations de caractère acquis, et, sur la base d'un élément d'informations se rapportant à un emplacement contenu dans l'élément d'informations de caractère acquis, est agencé pour identifier un élément d'informations d'emplacement.

3. Dispositif de traitement d'informations (30) selon la revendication 1, comprenant en outre :
- un moyen d'association de candidat (317) agencé, sur la base d'un algorithme prédéterminé, pour en outre associer, à chacun des éléments d'informations de caractère se rapportant à des informations d'historique, un élément d'informations d'emplacement qui sert de candidat à présenter à l'utilisateur; et
- un moyen d'acquisition d'informations d'utilisateur (318) agencé pour acquérir des informations d'utilisateur indiquant des informations se rapportant à l'utilisateur du terminal de communication (10),
dans lequel le moyen d'identification d'informations d'emplacement (315) est agencé pour identifier, à partir des éléments d'informations d'emplacement correspondant à l'élément d'informations de caractère identifié par le moyen d'identification d'informations de caractère (314), un élément d'informations d'emplacement conformément aux informations d'utilisateur acquises par le moyen d'acquisition d'informations d'utilisateur (318).

4. Dispositif de traitement d'informations (30) selon la revendication 3, dans lequel
- l'unité de stockage (102) stocke des informations d'historique pour chaque terminal de communication (10), et
- le moyen d'association de candidat (317) est agencé pour identifier un élément d'informations de caractère similaire à un élément d'informations de caractère se rapportant à des informations d'historique correspondant à un terminal de communication particulier (10), à partir d'informations d'historique correspondant à un autre terminal de communication (10), et pour associer, en tant qu'élément d'informations d'emplacement servant de candidat, un élément d'informations d'emplacement correspondant à l'élément d'informations de caractère identifié avec l'élément d'informations de caractère se rapportant aux informations d'historique correspondant au terminal de communication particulier (10).

5. Dispositif de traitement d'informations (30) selon la revendication 3, dans lequel
- les informations d'utilisateur sont des informations concernant un emplacement, et
- le moyen d'identification d'informations d'emplacement (315) est agencé pour identifier, à partir des multiples éléments d'informations, un élément d'informations d'emplacement indiquant un emplacement ayant une relation de position prédéterminée avec un emplacement se rapportant aux informations d'utilisateur.

6. Dispositif de traitement d'informations (30) selon la revendication 1, dans lequel
- un degré de priorité est attribuée à chacun des éléments d'informations de réglage dans les informations d'historique et,
- dans un cas où il y a de multiples éléments d'informations d'emplacement qui sont dans la relation spécifique, le moyen de commande de notification (312) est agencé pour commander le dispositif de transmission (105) pour qu'il transmette les informations de notification selon le degré de priorité de chacun des éléments d'informations de réglage dans lequel les multiples éléments d'informations d'emplacement sont contenus.

7. Dispositif de traitement d'informations (30) selon la revendication 1, dans lequel, dans un cas où des informations d'état indiquant qu'un état de l'utilisateur transmis depuis le terminal de communication (10) satisfait à une condition prédéterminée, le moyen de commande de communication est agencé pour commander le dispositif de transmission (105) pour qu'il arrête la transmission des informations de notification.

8. Dispositif de traitement d'informations (30) selon la revendication 1, dans lequel, lorsque l'élément d'informations d'emplacement indiqué par l'élément d'informations de réglage acquis par le moyen d'acquisition d'informations de réglage (311) et l'élément d'informations de position pendant une période de temps prédéterminée après que l'acquisition est entrée dans la relation spécifique, le moyen de commande de notification (312) est agencé pour commander le dispositif de transmission (105) de telle sorte qu'il ne transmet pas les informations de notification.

9. Dispositif de traitement d'informations (30) selon la revendication 1, dans lequel, dans un cas où le moyen de commande de notification (312) n'acquiert pas, dans une période de temps prédéterminée après la transmission des informations de notification par le dispositif de transmission, d'informations d'instruction indiquant une instruction de renotification comme réponse aux informations de notification, le moyen de commande de notification (312) est agencé pour commander le dispositif de transmission (105) de telle sorte qu'il ne transmet pas les informations de notification ensuite, et dans un cas où les informations d'instruction sont acquises durant la période de temps prédéterminée, le moyen de commande de notification (312) est agencé pour commander le dispositif de transmission (105) pour qu'il transmette les informations de notification à nouveau lorsque la relation spécifique est ensuite satisfaite.

10. Procédé de traitement d'informations utilisé dans un dispositif qui se réfère à des informations d'historique stockées dans une unité de stockage et commande un dispositif de transmission qui transmet des informations à un terminal de communication, l'unité de stockage stockant, en tant qu'informations d'historique, des éléments d'informations de réglage qui indiquent des éléments d'informations de caractère précédemment réglés par un utilisateur du terminal de communication, les informations de caractère étant un contenu d'une notification devant être envoyée au terminal de communication, et des éléments d'informations d'emplacement correspondant aux éléments d'informations de caractère, les informations d'emplacement indiquant un emplacement où la notification devrait être effectuée par rapport au terminal de communication, le procédé de traitement d'informations comprenant :
- une étape d'acquisition d'informations de caractère consistant à acquérir, à partir du terminal de communication, un élément d'informations de caractère réglé par l'utilisateur, les informations de caractère étant un contenu d'une notification devant être envoyée au terminal de communication ;
- une étape d'identification d'informations de caractère (S110) consistant à se référer aux informations d'historique, et à identifier, à partir des éléments d'informations de caractère contenus dans les informations d'historique, un élément d'informations de caractère similaire à l'élément d'informations de caractère acquis ;
- une étape d'identification d'informations d'emplacement (S150) consistant à se référer aux informations d'historique et à identifier un élément d'informations d'emplacement correspondant à l'élément d'informations de caractère identifié ;
- une étape de transmission de réponse (S160) consistant à, lorsqu'un élément d'informations d'emplacement correspondant à l'élément d'informations de caractère acquis doit être réglé par l'utilisateur, transmettre au terminal de communication des informations de réponse destinées à amener l'élément d'informations d'emplacement identifié à être présenté à l'utilisateur en tant que candidat pour l'élément d'informations d'emplacement à régler ;
- une étape d'acquisition d'informations de réglage (S200) consistant à acquérir un élément d'informations de réglage indiquant l'élément d'informations de caractère acquis et un élément d'informations d'emplacement réglé par l'utilisateur, à partir du terminal de communication qui reçoit les informations de réponse ; et
- une étape de commande de notification (S340) consistant à, lorsque l'élément d'informations d'emplacement indiqué par l'élément d'informations de réglage acquis et un élément d'informations de position indiquant une position du terminal de communication entrent dans une relation spécifique, amener le dispositif de transmission à transmettre au terminal de communication des informations de notification selon l'élément d'informations de caractère correspondant à l'élément d'informations d'emplacement indiqué par l'élément d'informations de réglage acquis.

11. Programme pour amener un ordinateur à exécuter les étapes suivantes, l'ordinateur se référant à des informations d'historique stockées dans une unité de stockage et commandant un dispositif de transmission qui transmet des informations à un terminal de communication, et l'unité de stockage stockant, en tant qu'informations d'historique, des éléments d'informations de réglage qui indiquent des éléments d'informations de caractère précédemment réglés par un utilisateur du terminal de communication, les informations de caractère étant un contenu d'une notification devant être envoyée au terminal de communication, et des éléments d'informations d'emplacement correspondant aux éléments d'informations de caractère, les informations d'emplacement indiquant un emplacement dans lequel la notification doit être effectuée par rapport au terminal de communication :
- une étape consistant à acquérir, à partir du terminal de communication, d'un élément d'informations de caractère réglé par l'utilisateur, les informations de caractère étant un contenu d'une notification devant être envoyée au terminal de communication ;
- une étape consistant à se référer aux informations d'historique et à identifier, à partir des éléments d'informations de caractère contenus dans les informations d'historique, un élément d'informations de caractère similaire à l'élément d'informations de caractère acquis ;
- une étape consistant à se référer aux informations d'historique, et à identifier un élément d'informations d'emplacement correspondant à l'élément d'informations de caractère identifié ;
- une étape consistant à, lorsqu'un élément d'informations d'emplacement correspondant à l'élément d'informations de caractère acquis doit être réglé par l'utilisateur, transmettre au terminal de communication des informations de réponse destinées à amener l'élément d'informations d'emplacement identifié à être présenté à l'utilisateur en tant que candidat pour l'élément d'informations d'emplacement à régler;
- une étape consistant à acquérir un élément d'informations de réglage indiquant l'élément d'informations de caractère acquis et un élément d'informations d'emplacement réglé par l'utilisateur, depuis le terminal de communication recevant les informations de réponse ; et
- une étape consistant à, lorsque l'élément d'informations d'emplacement indiqué par l'élément d'informations de réglage acquis et un élément d'informations de position indiquant une position du terminal de communication entrent dans une relation spécifique, amener le dispositif de transmission à transmettre au terminal de communication des informations de notification selon l'élément d'informations de caractère correspondant à l'élément d'informations d'emplacement indiqué par l'élément d'informations de réglage acquis.
